Europäisches Patentamt

European Patent Office

Office européen des brevets

(11) Publication number: **0 057 442**
A2

(12) # EUROPEAN PATENT APPLICATION

(21) Application number: **82100628.5**

(22) Date of filing: **29.01.82**

(51) Int. Cl.³: **G 03 B 27/46,** G 03 B 27/50

(30) Priority: **04.02.81 IT 1949281**

(43) Date of publication of application: **11.08.82**
**Bulletin 82/32**

(84) Designated Contracting States: **AT BE CH DE FR GB LI**
**LU NL SE**

(71) Applicant: **MICROMATIC S.p.A., Via Marianna Nistri, 8,**
**I-50047 Prato (Firenze) (IT)**
Applicant: **MOTION TECHNOLOGY Ltd.,**
**Nauenstrasse 65, CH-4002 Basilea (CH)**

(72) Inventor: **Steidle, Kurt A., Nauenstrasse 65,**
**CH-4002 Basilea (CH)**

(74) Representative: **Faggioni, Giovanmaria, Dr. et al,**
**Fumero-Studio Consulenza Brevetti**
**Widenmayerstrasse 4/I, D-8000 München 22 (DE)**

(54) Method and apparatus for microfilming documents of varied length.

(57) The invention concerns a «flow microfilming» system, particularly using a 16 mm film, wherein the film starts to be moved forward at the moment in which the document is introduced, is kept moving in synchronism with the document, and is stopped soon after the document has finished. According to the invention, the film is stopped — at the end of the document — at the moment in which the film length used each time for a given document, corresponds to a whole multiple of a minimum standard length.

"METHOD AND APPARATUS FOR MICROFILMING DOCUMENTS OF VARIED LENGTH"

=0*0=0*0=

It is known that the efficient filing of documents by use of microfilm is done using different techniques.

One of these techniques is the so-called "flow microfilming", which is usually done on a 16 mm film. According to this technique, the unexposed film is moved forward in synchronism with the document to be microfilmed. The film starts at the very moment in which the document is introduced in the microfilming chamber, which continuously exposes the film, and it stops soon after the document is finished.

This technique therefore allows to microfilm documents of any length - from small cards of size less than A5, up to continuous forms from electronic data processing systems - while guaranteeing each time the use of a film length in proportion to the length of the document.

Films thus prepared are placed in the archives such as they are, namely in a roll, normally of 30 meters length. If such a roll contains microfilmed documents of A4 size - which, according to the selected reduction ratio, may typically fit into a film length of 1 cm - one roll may contain about 3000 photograms. To later consult such photograms, it will evidently be necessary to unwind a great portion of the roll. Moreover, no system is provided to facilitate the location of the documents.

In order to facilitate and speed up the search, as well as - at least under certain aspects - to enable a more flexible filing procedure, a "microfiche" filing system is often preferred. According to this system, documents are microfilmed on a film having a size of approx. 10x15 cm. On such a film one can place for instance about 100 documents sized A4, using a reduction factor of around 28:1.

In this case, the microfilming system is essentially static, in the sense that the chamber is adapted to position the microfiche in one of a pre-arranged series of standard positions, so as to carry out the microfilming of the documents, one at a time, in a fixed exposure position.

This system, as already said, has the advantage of an easier and faster consultation - particularly if the filing of documents is made with reference to a progressive microfiche number and to a reference number diagramming the position of the photogram on the microfiche. In this way, an index is provided for each fiche, giving X and Y coordinates of each document. At this point, it is sufficient to simply place the photogram of interest beneath the viewing lens. There are also machines allowing the automatic search of the microfiche, wherein the search of the photogram and its positioning for reading are performed automatically, by introducing in the machine the coordinates of the photogram.

On the other hand, this system does not have the flexibility of flow microfilming, in that it does not allow to microfilm documents which are longer than the standard size - for instance A4 - for which the machine was prearranged.

An intermediate solution, which is becoming increasingly popular, is that of microfilming initially with a flow system, and then cutting the film into lengths of standard dimensions, for instance 14 cm, to insert them in the channels of "jackets", which are transparent cards suitably shaped to contain such film lengths.

Such jackets, though having dimensions substantially equal to those of the microfiche, cannot however be consulted in the aforespecified automatic search machines, since - taking into account that microfilming has been done with the flow system - the position of the photograms does not coincide with the standard reading positions provided on the machine, due to the size variation of the microfilmed documents.

A first object of the present invention is to solve the problem of reading documents of varied lengths in jackets, on automatic microfiche search machines, by an improved flow microfilming system.

Another object of the invention is to provide a system for the filing on microfiche of documents of varying length, apt to be automatically operated.

The present invention realizes the aforespecified objects by providing a flow microfilming system of the already mentioned type, in which the film starts to be moved forward at the moment in which the document is introduced in the chamber, is kept moving in synchronism with the progress of the document, and is stopped soon after the document has finished, and which is furthermore characterized in that the film is stopped at the moment in which the film length, moved for microfilming any given document, corresponds to a whole multiple of a minimum pre-established length.

Further characteristics and advantages of the invention will anyhow result more evident from the following description, given with reference to the accompanying drawings, in which:

Fig. 1 shows an example of the standard coordinate positions of the photograms, according to a typical microfiche arrangement;

Fig. 2 shows a portion of a jacket carrying documents microfilmed with the system according to the invention; and

Fig. 3 shows a diagrammatic view of a flow microfilming apparatus, according to the present invention.

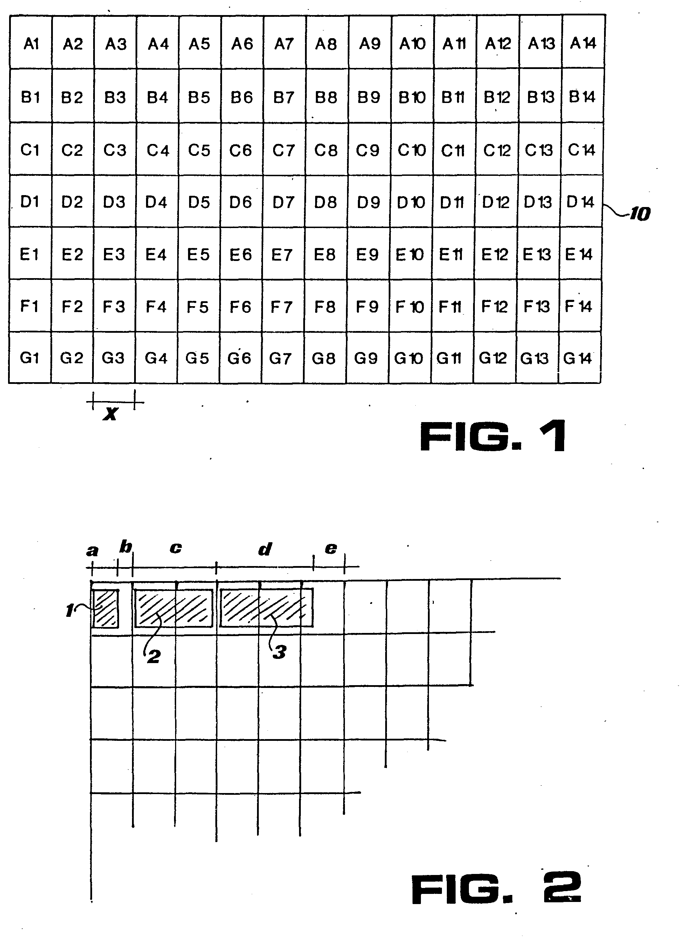

According to the invention, the minimum pre-established length by which the film is moved forward in flow microfilming, preferably corresponds to the length of a standard microfiche photogram, namely the length $X$ indicated in figure 1. Each document is thus filmed starting from a distance equal to an integral multiple of $X$, beginning from a reference position, for instance the leftmost end of the micro-

0057442

fiche.

Figure 1 shows a standard microfiche. It will be observed that 98 individually named positions are available on the fiche. Typically, when the fiche is created, an index is provided showing which document is located at each of the 98 positions named on the fiche. Thus, when the viewer subsequently wishes to search for a particular document, he need only know the coordinates locating the position of the document concerned, for instance "E8", and an automatic search apparatus will move the right photogram under the viewing lens.

Alternatively, of course, the viewer himself can move and control the fiche with respect to the lens up to the desired viewing position. It will be appreciated, however, that the operability of such a system requires that documents be confined to within the denominated reference areas, and that this does not normally occur if a flow or continuous microfilming system is used to film documents of varying length. Thus, even if a continuous microfilm is made of documents of varying lengths, cut into strips of standard length and inserted into appropriate channels of a standard microfiche jacket, this will not allow an automatic search in the manner heretofore specified, because there is necessarily no true correspondence between the reference positions of the fiche layout 10 of figure 1 and the actual position of the documents within the filled channels. According to the present invention, this difficulty is overcome by providing a flow microfilming method apt to guarantee that all the documents start at defined positions with respect to the reference coordinates of the locations shown on the fiche layout of figure 1. Thus, if a document is too long, it will extend over the following frame, which will readily be located by the viewer when later viewing the fiche. In this way, one can view documents of varying length by simply calling for the reference coordinates of the frame which contains the beginning of the document, which coordinates are available in the already mentioned index or reference list.

This object is accomplished, according to the present invention,

0057442

by controlling the starting position of each copy and by providing means to ensure that microfilming continues for an integral multiple length of a minimum standard, so that all the documents are microfilmed from the beginning of an integral multiple of this standard film length.

An example of microfilming in accordance with the system of the present invention is diagrammatically shown in figure 2.

Microfilming of a document 1 having a length $a$ (when reduced) less than the standard length $X$: as shown in figure 2, while the document covers a length $a$, the film is moved forward – during microfilming – by a minimum distance $X$. Since the latter is greater than the document length $a$, there remains an unused space of length $b$, so that $a + b = X$. It is thus evident that the following document – or at least its beginning – will coincide with the successive standard position (A2) of the microfiche.

Microfilming of a document 2 having a length $c$ (when reduced) equal to a whole multiple of the length $X$: in the case shown, the document's length $c$ is equal to $2X$, as shown in figure 2, so that document 2 covers two standard positions (A2 and A3) without creating any search problems.

Microfilming of a document 3 having a length $d$ (when reduced) greater than the standard length: as again shown in figure 2; while document 3 covers a length $d$, greater for instance than $2X$ and less than $3X$, the film is moved forward – during microfilming – by a length $3X$, leaving an unused space $e$, so that $d + e = 3X$.

After microfilming in this way, the film can be cut into strips of standard length which are inserted into jackets, whereby the jacket formed with the aforedescribed system can no doubt be searched by an automatic microfiche search apparatus, in that the photogram position corresponding to the coordinates of a given document marked on an index, will always include at least the beginning of such document, independently of the length of the document itself or of the documents which precede it, so that the first photogram of a docu-

0057442

ment comprising several photograms may easily be selected by the apparatus.

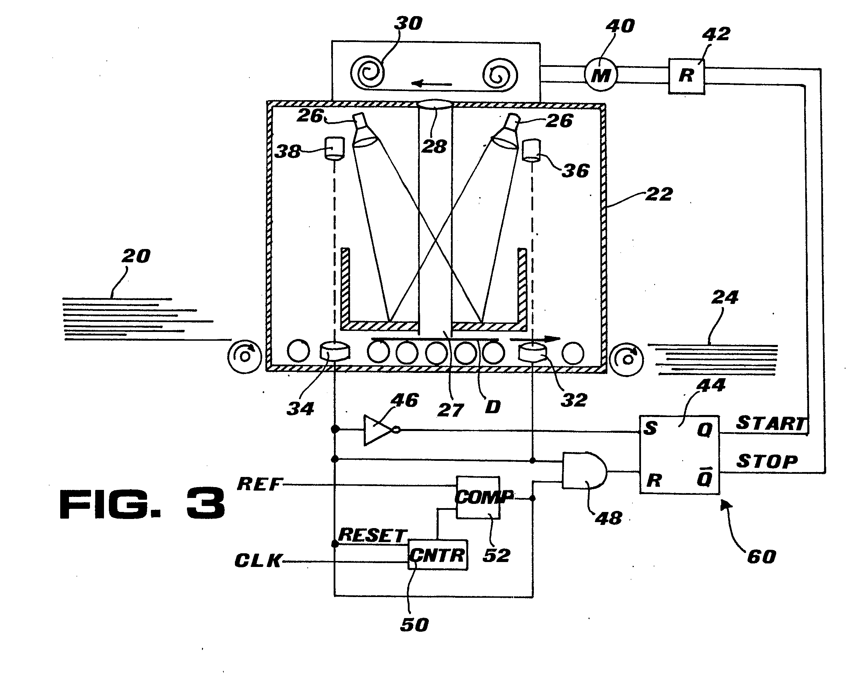

Figure 3 shows a diagrammatic view of a flow microfilming apparatus for carrying out the method according to the present invention. A stack 20 of documents of varying length is shown to be fed on the left side of the apparatus, for microfilming in an exposure chamber 22 and being piled up, after microfilming, in a second stack 24. Lamps 26 in the microfilming chamber 22 provide illumination for the continuous flow microfilming process, according to which the documents are fed into the exposure chamber 22, in which the image seen through a slit 27 is focused by a lens 28 onto a film 30. The film is moved continuously forward by a motor 40 operated by a relay 42, which is in turn energized by motor start and motor stop signals, being sent to it by a control circuit which is generically indicated by 60.

The motor control circuit 60 is energized in reply to output signals from photoelectric cells 32 and 34, which are hit by light beams sent from sources 36 and 38. Said beams are interrupted by passage of the documents through the exposure chamber 22, and control the film motion as follows.

When a document indicated by D interrupts the light beam connecting the source 38 with the photoelectric cell 34, this causes a signal that the document itself has entered the microfilming chamber and that microfilming should start. Accordingly, the signal of the photoelectric cell 34 which goes low when the document intercepts the light beam, is inverted by an inverter 46 and passed to the SET input of a flip-flop circuit 44, thereby causing an output START signal and energizing the relay 42 to operate the motor 40. The output signal from the photoelectric cell 34 is also sent to an AND gate 48 and is also used to zeroize a counter 50, which is supplied with a clock signal. Accordingly, the clock signal is counted in the counter 50 and the amount of the count in the counter 50, at any given time, is an indication of the length of time in which the motor has been running.

The counter output is passed to a comparator 52, which is supplied with a reference signal. Accordingly, when the count supplied to the comparator 52 by the counter 50 is equal to the reference signal, the comparator 52 issues an output signal to the AND gate 48, which signal is indicative that the film is presently positioned at one of the standard starting positions. If the other output to the AND gate 48 - namely, the signal from the photoelectric cell 34 - is also high, the output of AND gate 48 is high, thus indicating that no document is being microfilmed and that the film has reached the start of one of the standard locations defined by the coordinates. Accordingly, the RESET input of the flip-flop circuit 44 is high, and the motor 40 is stopped. On the other hand, if the output signal of the comparator 52 goes high while a document, longer than a single frame, is still being microfilmed, the other input to the AND gate 48 - namely, still the signal from the photoelectric cell 34 - is low, so that the output of AND gate 48 remains low. Accordingly the motor 40 continues to run. The counter 50, however, is zeroized by the comparator's output which has gone high, thus indicating that an end of frame has been passed and a new frame has been started. The output of the second photoelectric cell 32 is also connected to the AND gate 48, so that if its signal is high, indicating that no document is present, and the comparator output indicates that an integral number of frames has passed, the motor stops running.

It is anyhow understood that the invention is not limited to the particular arrangements illustrated by way of example, but that there may be various practical embodiments differing from the same, without thereby departing from the scope of the invention itself.

In particular, the invention may be used to provide a single diazo-type microfilm with reduced-size copies of documents of varying length, by performing successive microfilming operations beginning at predetermined index locations on the fiche, thereby allowing documents of varying lengths to be searched by an automatic microfiche search apparatus. Accordingly, the above description of the

0057442

invention should not be considered as a limitation of its scope, but merely as an example of a preferred embodiment thereof.

## CLAIMS

1) System for the filing of microfilmed documents by flow microfilming, of the type in which, in a microfilming chamber, the film starts to be moved forward at the moment in which the document is introduced in such chamber, and is kept moving in synchronism with the progress of the document, to be stopped soon after the document has finished, the microfilm being then cut into lengths to be filed in jackets, characterized in that the film is stopped at the moment in which the film length being moved forward corresponds to a whole multiple of a minimum pre-established length.

2) System as in claim 1, wherein said minimum pre-established length corresponds to the length (X) of a standard microfiche photogram.

3) System as in claims 1 or 2, wherein each of said microfilm lengths is housed in the respective channel of a jacket, carrying the beginning of each photogram-document, of any given length, in correspondence with a standard microfiche viewing position.

4) Apparatus for microfilming documents, particularly for carrying out the method according to anyone of the preceding claims, comprising driving means for moving forward the document to be microfilmed, driving means for moving forward the microfilm, means for synchronizing the movement of said two driving means, and means for starting the two driving means at the moment in which the document is introduced in the chamber, characterized in that it furthermore comprises means for detecting the movement of the document and for

0057442

sending a first signal when the document has finished, means for measuring the film length which has been moved forward, and means for stopping the film motion after said first signal has been sent and after the film has been moved further to an extent corresponding to an integral multiple of a minimum pre-established length.

0057442

| A1 | A2 | A3 | A4 | A5 | A6 | A7 | A8 | A9 | A10 | A11 | A12 | A13 | A14 |
|----|----|----|----|----|----|----|----|----|-----|-----|-----|-----|-----|
| B1 | B2 | B3 | B4 | B5 | B6 | B7 | B8 | B9 | B10 | B11 | B12 | B13 | B14 |
| C1 | C2 | C3 | C4 | C5 | C6 | C7 | C8 | C9 | C10 | C11 | C12 | C13 | C14 |
| D1 | D2 | D3 | D4 | D5 | D6 | D7 | D8 | D9 | D10 | D11 | D12 | D13 | D14 |
| E1 | E2 | E3 | E4 | E5 | E6 | E7 | E8 | E9 | E10 | E11 | E12 | E13 | E14 |
| F1 | F2 | F3 | F4 | F5 | F6 | F7 | F8 | F9 | F10 | F11 | F12 | F13 | F14 |
| G1 | G2 | G3 | G4 | G5 | G6 | G7 | G8 | G9 | G10 | G11 | G12 | G13 | G14 |

10

x

# FIG. 1

a   b   c   d   e

1   2   3

# FIG. 2

FIG. 3